# EUROPÄISCHE PATENTSCHRIFT

(11) **EP 1 212 984 B1**
(45) Veröffentlichungstag und Bekanntmachung des Hinweises auf die Patenterteilung: **10.01.2007**
(21) Anmeldenummer: 01127688.8
(22) Anmeldetag: 21.11.2001
(51) Int. Cl.: A61C 5/06, A61C 9/00

(54) **Spritze zum dosierten Abgeben von dentalen Werkstoffen**
Seringue for proportioning dispense dental products
Seringue pour l'administration dosée de produits dentaires

(30) Priorität: 05.12.2000 DE 10060614
(43) Veröffentlichungstag der Anmeldung: 12.06.2002
(73) Patentinhaber: Heraeus Kulzer GmbH, 63450 Hanau (DE)
(72) Erfinder: Albach, Andrej, 61273 Wehrheim (DE)
(74) Vertreter: Kühn, Hans-Christian

(56) Entgegenhaltungen:
- EP-A- 0 284 244
- US-A- 3 002 517
- US-A- 3 724 076
- US-A- 4 457 712
- US-A- 4 560 352
- US-A- 5 618 273

## Beschreibung

Die Erfindung betrifft eine Spritze zur Abgabe fließfähiger und/oder hochviskoser Materialien mit einem eine Austrittsdüse aufweisenden Spritzenrohr, einem darin angeordneten Materialbehälter, einem an dem der Austrittsdüse gegenüberliegenden Ende des Spritzenrohres angeordneten Griffstück und einem durch das Griffstück hindurch in das Spritzenrohr hineinbewegbaren Spritzenkolben.

Derartige Spritzen sind bereits aus EP 225 265 A1 bekannt. In dieser Druckschrift ist eine Spritze zum Injizieren pastöser Produkte offenbart, bei der ein Probenrohr in einem Zylinder angeordnet ist, wobei das Probenrohr einen einen wesentlichen Teil seines Umfanges umfassenden Schlitz aufweist, mit dessen Hilfe Material von einer Mischplatte abgeschabt und in den Zylinder gebracht werden kann. Dieses Material wird mittels eines gleitbaren Kolbens durch die Spitze des Zylinders gepresst und so an dem Behandlungsort injiziert.

Eine weitere Spritze zur Abgabe von pastösen Materialien ist in DE 21 10 463 C2 oder aus DE 34 28 031 A1 bekannt. Aus diesen Druckschriften sind Spritzen zur Abgabe von Dentalmaterialien bekannt, wobei bei Ausübung größerer Drücke die Gefahr besteht, dass die Austrittsdüse von der Spritze abreißt oder der Spritzenkörper selbst aufplatzt.

Aufgabe der vorliegenden Erfindung ist es, eine gegenüber dem Stand der Technik verbesserte Spritze bereitzustellen, die auch bei Ausübung größerer Drücke sicher betrieben werden kann.

Erfindungsgemäß wird die Aufgabe dadurch gelöst, dass das Griffstück mittels eines Gewindes an dem Spritzenrohr angeordnet ist und dass der Materialbehälter eine geschlossene Mantelfläche aufweist. Dadurch kann die Kraft von dem Spritzenkolben optimal auf das in der Spritze angeordnete Material übertragen werden, ohne dass die Gefahr des Abreißens der Austrittsdüse oder Aufreißens eines Teils des Spritzenrohres besteht. Durch die doppelte Wandstärke wird die Stabilität und Haltbarkeit der Spritze verbessert.

Insbesondere ist es vorteilhaft, dass das eine Ende des Materialbehälters an der Austrittsdüse angeordnet ist und in dem gegenüberliegenden Ende ein zwischen den Enden beweglicher Stopfen angeordnet ist, wobei das in die Spritze hineinbewegbare Ende des Spritzenkolbens zur Anlage an dem Stopfen ausgebildet ist. Dadurch wird die Kraft mittels des Stopfens von dem Spritzenkolben auf das in der Spritze befindliche Material übertragen. Es ist auf einfache Weise möglich, den Stopfen dicht mit der Wand des Materialbehälters abschließend auszubilden, diese Dichtung braucht nicht durch den Spritzenkolben selbst gewährleistet zu werden, so dass dieser einfacher und kostengünstiger ausgebildet werden kann.

Des weiteren ist es zweckmäßig, dass die Mantelfläche des Materialbehälters formstabil ist, wobei die Enden des Materialbehälters offen ausgebildet sein können.

In einer weiteren vorteilhaften Ausgestaltung der Erfindung kann der Materialbehälter aus einem flexiblen Material, beispielsweise einer Kunststofffolie ausgebildet sein, wobei an seinem dem Griffstück zugewandten Ende ein in dem Spritzenrohr beweglicher Stopfen angeordnet sein kann, so dass das in die Spritze hineinbewegbare Ende des Spritzenkolbens zur Anlage an dem Stopfen ausgebildet ist. Es ist natürlich auch möglich, den Druck vom Spritzenkolben direkt auf das flexible Material zu übertragen, wobei der Spritzenkolben in geeigneter Weise und zur Wand des Spritzenrohres abdichtend ausgebildet sein muss.

Vorteilhaft ist es weiterhin, dass der Außendurchmesser des Materialbehälters etwa gleich groß ist wie der Innendurchmesser des Spritzenrohres, so dass beide Rohre mit möglichst geringem Spiel aneinander anliegen und sich gegenseitig verstärken. Die Spritze kann beispielsweise aus Kunststoff gebildet sein.

Zweckmäßig ist es insbesondere, dass Spritzenkörper und Austrittsdüse einstückig ausgebildet sind. Hierzu können beide Teile zum Beispiel durch Spritzgießen in einem einzigen Arbeitsgang gefertigt werden. Die Verbindung zwischen Austrittsdüse und Spritzenrohr, die im allgemeinen bei Druckausübung hoch belastet ist, ist in der Lage, die beim Betrieb auftretenden hohen Drücke aufzunehmen, ohne dass die Spitze von dem Rohr abreißt.

Die Erfindung betrifft des weiteren die Verwendung der beschriebenen Spritze zur Aufnahme und Abgabe von Dentalmaterialien.

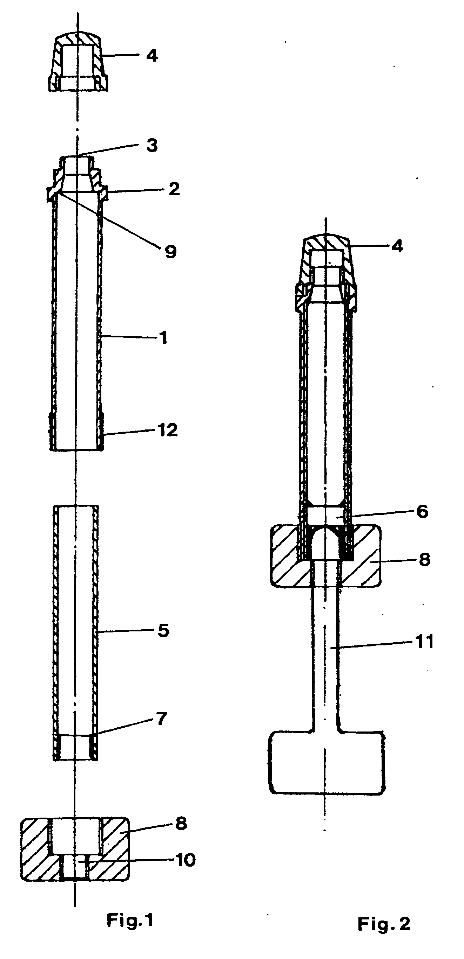

Im folgenden wird ein Ausführungsbeispiel der Erfindung anhand einer Zeichnung beschrieben. Die Zeichnung zeigt eine erfindungsgemäße Spritze in Explosionsdarstellung (Fig. 1) und im zusammengebauten Zustand (Fig. 2) jeweils im Schnitt.

An das Spritzenrohr 1 einer Spritze ist eine Austrittsdüse 2 monolithisch angeordnet, indem beide Teile beispielsweise in einem Arbeitsgang durch Spritzgießen hergestellt werden. Die Austrittsdüse 2 weist eine Austrittsöffnung 3 auf, die in ihrer Größe variiert und der Fließfähigkeit bzw. Viskosität des Materials angepasst wird, wobei diese Anpassung während des Spritzgießens erfolgt.

Die Austrittsöffnung 3 wird mit einer Kappe 4 verschlossen. In dem Materialbehälter 5 wird zunächst ein Stopfen 6 eingesetzt und gegen einen Anschlag 7 geschoben. Danach wird Dentalmaterial in den Materialbehälter 5 eingefüllt und dieser in das Spritzenrohr 1 hineingeschoben. Das Spritzenrohr 1 weist an seinem einen Ende ein Gewinde 12 auf, auf das das Griffstück 8 aufgeschraubt wird. Der Materialbehälter 5 ist geringfügig (einige zehntel Millimeter) länger als der zylindrische Innenraum des Spritzenrohres 1, so dass sein eines Ende um diese Länge aus dem Spritzenrohr 1 herausragt. Beim Aufschrauben des Griffstückes 8 wird das Spritzenrohr 1 gegen die Stirnseite des Materialbehälters 5 gedrückt, so dass dieser fest gegen eine Anschlagschulter 9 an der Verbindungsstelle von Spritzenrohr 1 und Austrittsdüse 2 gepresst wird. Dadurch wird gesichert, dass kein Material aus dem Materialbehälter 5 in einen eventuell vorhandenen Zwischenraum zwischen diesem Materialbehälter 5 und dem Spritzenrohr 1 dringt.

Durch eine Gewindebohrung 10 in dem Griffstück 8 hindurch wird der Spritzenkolben 11 in den Materialbehälter 5 hineingedreht, bis die Stirnfläche des Spritzenkolbens 11 an den Stopfen 6 anstößt. Zum Auspressen des Dentalmaterials aus der Spritze wird die Kappe 4 entfernt und der Spritzenkolben 11 weiter in den Materialbehälter hineingeschraubt, so dass mittels des Stopfens 6 das Dentalmaterial aus der Austrittsöffnung 3 herausgepresst wird. Der Spritzenkolben 11 kann längs des Gewindes Markierungen aufweisen zur Orientierung über die Lage des Stopfens 6 innerhalb des Materialbehälters 5 und damit zur Orientierung über den Entleerungsgrad der Spritze. Der Stopfen 6 selbst kann auch unmittelbar an den Spritzenkolben 11 angeformt sein. In diesem Fall entfällt der Anschlag 7 des Materialbehälters 5.

Alle Teile dieser Spritze sind aus einem formstabilen Kunststoff gebildet, können jedoch auch beispielsweise aus Metall gebildet sein.

In einer weiteren Ausführungsform der Erfindung kann der Materialbehälter 5 aus einem flexiblen Material, beispielsweise einem Folienbeutel gebildet sein. In diesem Fall wird der Stopfen 6 nach Einsetzen des Materialbehälters 5 in das Spritzenrohr 1 formschlüssig direkt in dem Spritzenrohr 1 platziert.

## Patentansprüche

1. Spritze zur Abgabe fließfähiger und/oder hochviskoser Materialien mit einem eine Austrittsdüse aufweisenden Spritzenrohr, einem darin angeordneten Materialbehälter, einem an dem der Austrittsdüse gegenüberliegenden Ende des Spritzenrohres angeordneten Griffstück und einem durch das Griffstück hindurch in das Spritzenrohr hineinbewegbaren Spritzenkolben, **dadurch gekennzeichnet, dass** das Griffstück (8) mittels eines Gewindes (12) an dem Spritzenrohr (1) angeordnet ist und dass der Materialbehälter (5) eine geschlossene Mantelfläche aufweist.

2. Spritze nach Anspruch 1, **dadurch gekennzeichnet, dass** das eine Ende des Materialbehälters (5) an der Austrittsdüse (2) angeordnet ist und in dem gegenüberliegenden Ende ein zwischen den Enden beweglicher Stopfen (6) angeordnet ist, wobei das in die Spritze hineinbewegbare Ende des Spritzenkolbens (11) zur Anlage an dem Stopfen (6) ausgebildet ist.

3. Spritze nach Anspruch 2, **dadurch gekennzeichnet, dass** die Mantelfläche des Materialbehälters (5) formstabil ist.

4. Spritze nach Anspruch 3, **dadurch gekennzeichnet, dass** die Enden des Materialbehälters (5) offen ausgebildet sind.

5. Spritze nach Anspruch 1, **dadurch gekennzeichnet, dass** der Materialbehälter (5) aus einem flexiblen Material gebildet ist und an seinem dem Griffstück (8) zugewandten Ende ein in dem Spritzenrohr (1) beweglicher Stopfen (6) angeordnet ist, wobei das in die Spritze hineinbewegbare Ende des Spritzenkolbens (11) zur Anlage an dem Stopfen (6) ausgebildet ist.

6. Spritze nach einem der Ansprüche 1 bis 5, **dadurch gekennzeichnet, dass** der Außendurchmesser des Materialbehälters (5) etwa gleich groß ist wie der Innendurchmesser des Spritzenrohres (1).

7. Spritze nach einem der Ansprüche 1 bis 6, **dadurch gekennzeichnet, dass** das Spritzenrohr (1) und die Austrittsdüse (2) einstückig ausgebildet sind.

8. Verwendung einer Spritze nach einem der Ansprüche 1 bis 7 zur Abgabe von Dentalmaterialien.

## Claims

1. A syringe for delivering flowable and/or highly viscous materials with a syringe tube, which has an outlet nozzle, a material container, is disposed therein, a handle, which is disposed at the end of the syringe tube opposite to the outlet nozzle, and a syringe piston, which can be moved through the handle into the syringe tube, **characterised in that** the handle (8) is connected by means of a thread (12) to the syringe tube (1) and the material container (5) has a closed lateral surface around the axis.

2. The syringe as claimed in Claim 1, wherein one end of the material container (5) is disposed at the outlet nozzle (2) and a plug (6), which can be moved between the ends, is arranged at the opposite ends, while the end of the syringe piston (11), which can be moved into the syringe, is constructed so as to be in contact with the plug (6).

3. The syringe as claimed in Claim 2, **characterised in that** the lateral surface of the material container (5) around the axis is dimensionally stable.

4. The syringe as claimed in Claim 3, **characterised in that** the ends of the material container (5) are constructed open.

5. The syringe as claimed in Claim 1, **characterised in that** the material container (5) is formed from a flexible material and a plug (6), which can be moved in the syringe tube (1), is arranged at the end of the material container (5) facing the handle (8), while the end of the syringe piston (11), which can be moved into the syringe, is constructed so as to be in contact with the plug (6).

6. The syringe as claimed in any one of Claims 1 to 5, **characterised in that** the external diameter of the material container (5) is approximately equal in size to the internal diameter of the syringe tube (1).

7. The syringe as claimed in any one of Claims 1 to 6, **characterised in that** the syringe tube (1) and the outlet nozzle (2) are constructed in one piece.

8. The use of a syringe as claimed in any one of Claims 1 to 7 for delivering dental materials.

## Revendications

1. Seringue pour la dispensation de produits fluides et/ou hautement visqueux, comprenant un tube de seringue qui présente une buse de sortie, un réservoir de produit agencé dans le tube de seringue, une pièce de préhension disposée à l'extrémité du tube de seringue opposée à celle où se trouve la buse de sortie, et un piston de seringue pouvant être déplacé à l'intérieur du tube de seringue à travers la pièce de préhension, **caractérisée en ce que** la pièce de préhension (8) est agencée sur le tube de seringue (1) au moyen d'un filetage (12), et **en ce que** le réservoir de produit (5) présente une surface enveloppe périphérique fermée.

2. Seringue selon la revendication 1, **caractérisée en ce qu'**une extrémité du réservoir de produit (5) est agencée au niveau de la buse de sortie (2), et dans l'extrémité opposée est agencé un bouchon (6) mobile entre les deux extrémités, l'extrémité du piston de seringue (11), qui peut être déplacée à l'intérieur de la seringue, étant réalisée pour venir en appui sur le bouchon (6).

3. Seringue selon la revendication 2, **caractérisée en ce que** la surface enveloppe périphérique du réservoir de produit (5) est de forme stable.

4. Seringue selon la revendication 3, **caractérisée en ce que** les extrémités du réservoir de produit (5) sont réalisées ouvertes.

5. Seringue selon la revendication 1, **caractérisée en ce que** le réservoir de produit (5) est réalisé en un matériau flexible, et à son extrémité dirigée vers la pièce de préhension (8) est agencé un bouchon (6) mobile dans le tube de seringue (1), l'extrémité du piston de seringue (11), qui peut être déplacée à l'intérieur de la seringue, étant configurée pour venir en appui sur le bouchon (6).

6. Seringue selon l'une des revendications 1 à 5, **caractérisée en ce que** le diamètre extérieur du réservoir de produit (5) est environ de même grandeur que le diamètre intérieur du tube de seringue (1).

7. Seringue selon l'une des revendications 1 à 6, **caractérisée en ce que** le tube de seringue (1) et la buse de sortie (2) sont réalisés d'un seul tenant.

8. Utilisation d'une seringue selon l'une des revendications 1 à 7 pour dispenser des produits dentaires.
